# EUROPEAN PATENT SPECIFICATION

(11) **EP 3 382 937 B1**
(45) Date of publication and mention of the grant of the patent: **18.05.2022**
(21) Application number: 17163287.0
(22) Date of filing: 28.03.2017
(51) Int. Cl.: H04L 9/40, H04L 69/40, H04L 43/00, H04L 43/0823

(54) **TRANSMISSION DEVICE, SYSTEM AS WELL AS METHOD FOR TRANSMITTING MONITORING INFORMATION**
ÜBERTRAGUNGSVORRICHTUNG, SYSTEM SOWIE VERFAHREN ZUR ÜBERTRAGUNG VON ÜBERWACHUNGSINFORMATIONEN
DISPOSITIF DE TRANSMISSION, SYSTÈME ET PROCÉDÉ POUR TRANSMETTRE DES DONNÉES DE SURVEILLANCE

(43) Date of publication of application: 03.10.2018
(73) Proprietor: Rohde & Schwarz GmbH & Co. KG, 81671 München (DE)
(72) Inventor: Schmid, Bjoern, 81371 Munich (DE)
(74) Representative: Prinz & Partner mbB

(56) References cited:
- CN-U- 204 993 451
- CN-U- 205 405 912
- US-A1- 2005 033 990
- US-B1- 9 584 762

## Description

The invention relates to a system for transmitting monitoring information as well as a method for transmitting monitoring information.

In the state of the art, systems are known that use a virtual private network connection (VPN connection) in order to provide access to a functional unit at a remote location, for instance a broadcasting and/or streaming unit, by using a mobile device such as a mobile phone. The VPN connection is typically used as it ensures high security while providing a secure infrastructure.

However, the implementation of a VPN connection is expensive and a lot of efforts are required in order to ensure that a user using a VPN connection has only access to certain information, for instance monitoring information, of the corresponding unit. Thus, a VPN connection is a complex system with regard to its implementation and configuration.

US 9,584,762 B1 describes a video conference equipment monitoring system for monitoring the performance data of video conference equipment such as webcams.

US 2005/0033990 A1 discloses a trusted network with a unidirectional transmitter that is in unidirectional communication with a receiver being outside the trusted network.

Accordingly, there is a need for an easy and secure access possibility in order to retrieve monitoring information from a remote location.

The invention provides a system for transmitting monitoring information according to claim 1.

The invention is based on the finding that the monitoring information can be provided to a user in an easy manner while forwarding only the monitoring information gathered from the functional unit to the cloud unit being accessible by an end device, for instance a mobile device such as a mobile phone, a tablet, a notebook or any other suitable electronic end device. The secure connection between the transmission device and the cloud unit ensures that the monitoring information is forwarded in a secure manner. Accordingly, it is not required that the user has direct access to the functional unit in order to retrieve the monitoring information which simplifies the establishment of the whole system appropriately. A complex virtual private network connection (VPN connection) is no more required for providing the relevant monitoring information to the user being at a remote location with regard to the functional unit. The transmission device itself may comprise the functional unit. As mentioned, the functional unit is a broadcasting and/or streaming unit that is configured to generate a transport stream for broadcasting and/or streaming.

The direct access to the functional unit via the secure connection is prohibited due to the unidirectional secure connection used for transmitting the monitoring information from the functional unit to the cloud unit. Hence, a direct connection to the functional unit from the outside cannot be established via the unidirectional connection with regard to the data transfer. Therefore, a controlling function is not provided. The user having access to the cloud unit is not enabled to control the functional unit via the cloud unit as the user can only retrieve the monitoring information being provided. Accordingly, it is not necessary to establish a complex virtual private network having certain access rights ensuring that the user can only access the monitoring information without any controlling function.

For establishing the unidirectional connection with regard to the data transfer, a bidirectional protocol can be used, for instance an Internet Protocol (IP) or a Transmission Control Protocol (TCP).

According to another aspect, the monitoring information is provided in real-time. The cloud unit continuously has access to the monitoring information provided by the functional unit which ensures that the monitoring information on the cloud unit is always up-to-date.

In addition, the transmission device may be configured to transmit legacy messages via the secure connection to the cloud unit. For instance, messages according to the Simple Network Management Protocol (SNMP) are used that are transmitted via the secure connection. Accordingly, the monitoring information can be sent in an easy manner as SNMP messages are used wherein the requested security is ensured while using the secure connection.

The cloud unit can be considered as an information sink that provides the monitoring information received from the at least one transmission device as a unidirectional connection is established.

According to an aspect, the cloud unit is configured to provide access for a user, in particular for a user having a web-enabled end device, such that the user is enabled to access the monitoring information on the cloud unit at least partly. The cloud unit is configured to provide web access for the user such that the user may use an electronic end device having web access for establishing the connection to the cloud unit, in particular for getting access to the monitoring information provided on the cloud unit. The connection can be established by a simple web connection, for instance via the hypertext transfer protocol (http).

According to another aspect, the cloud unit is configured to grant access to the monitoring information based on a user login, in particular wherein the monitoring information provided by the cloud unit differs with respect to user rights defined by the user login. Thus, the kind of monitoring information provided depends on the user, in particular the user rights related to the user login used for getting access to the cloud unit. This ensures that certain users only have access intended by an administrator of the whole system.

According to a certain embodiment, the system comprises a web-enabled end device that is configured to access the monitoring information provided by the cloud unit at least partly, in particular wherein the cloud unit is configured to analyse the monitoring information provided such that the analysing results are provided to the web-enabled end device. The monitoring information provided by the cloud unit can be accessed via each end device being web-enabled provided. As the cloud unit itself is used for analyzing the monitoring information provided by the transmission device, more advanced analysis methods can be applied due to the increased computational power of the cloud unit compared to a single device or unit, for instance the functional unit. The cloud unit may be established by several devices in order to form a cloud computing architecture used for processing big data.

Generally, the end device only has access to the cloud unit, but not directly to the functional unit providing the monitoring information. This ensures that the end device being potentially unsecure does not have direct access to the functional unit processing security relevant data, in particular the broadcasting and/or streaming unit. The access for the end device can be ensured by using standard network applications. Thus, complex virtual private network (VPN) connections are not necessary for providing access to the monitoring information of the functional unit. As the end device only has access to the cloud unit and, further, the secure connection is a unidirectional one, it is ensured that the end device is not enabled to control the corresponding functional unit, in particular the broadcasting and/or streaming unit.

According to the invention, the system comprises several transmission devices, in particular at different locations, wherein each of the transmission devices is configured to provide monitoring information to the cloud unit via a secure connection. Thus, the cloud unit collects the monitoring information of different functional units being located at different locations wherein the collected monitoring information of the several locations can be accessed by the user via the cloud unit.

According to the invention, the cloud unit is configured to combine the different monitoring information such that the different monitoring information is accessible, in particular wherein the cloud unit is configured to analyze the different monitoring information provided. More data is gathered that can be analyzed appropriately by the cloud unit having higher computational capacities compared to a single device, for instance a functional unit providing the monitoring information. The cloud unit applies advanced analysis methods and concepts while analyzing the corresponding monitoring information such that deeper and more sophisticated analyses of the services are possible as multiple services are analyzed simultaneously, particular multiple services of different locations.

Moreover, the system may comprise at least one broadcasting and/or streaming unit. The broadcasting and/or streaming unit may be the functional unit that provides the monitoring information that is forwarded by the transmission device to the cloud unit. Accordingly, the monitoring information being accessible via the cloud unit relates to broadcasting and/or streaming data processed by the broadcasting and/or streaming unit.

According to a certain embodiment, a transmission device and the broadcasting and/or streaming unit are formed as a single device such that the transmission device comprises the broadcasting and/or streaming unit.

Furthermore, several broadcasting and/or streaming units are located in a common intranet area wherein these several units are configured to provide different monitoring information via a common outgoing port. The common intranet area represents a certain location having one transmission device. This transmission device may use a single outgoing port for providing the several monitoring information gathered from the different broadcasting and/or streaming units to the cloud unit. Hence, the information technology security (IT security) is increased as it is easier to secure a single outgoing with respect to several ports used by each broadcasting and/or streaming unit individually.

Further, the invention provides a method for providing monitoring information to a user at a remote location according to claim 9.

Herein, the secure connection is a unidirectional one prohibiting direct access to the broadcasting and/or streaming unit, so that a user having access to the cloud unit is not enabled to control the broadcasting and/or streaming unit via the cloud unit as the user can only retrieve the monitoring information being provided.

The monitoring information gathered from the at least one functional unit is forwarded to the transmission device in a secure manner ensuring that an inadvertent access is prohibited appropriately. For instance, messages according to the Simple Network Management Protocol (SNMP) are used for transmission purposes wherein these messages are transmitted via the secure connection.

According to an aspect, a user accesses the cloud unit via a web interface in order to retrieve the monitoring information provided at least partly. This ensures that the user has access from anywhere, in particular from outside of the intranet area that comprises the functional unit.

According to another aspect, the monitoring information is transmitted in real time such that the monitoring information provided by the cloud unit is up-to-date. The user is enabled to access the actual monitoring information in an easy manner while accessing the cloud unit, in particular via the web interface established by the cloud unit.

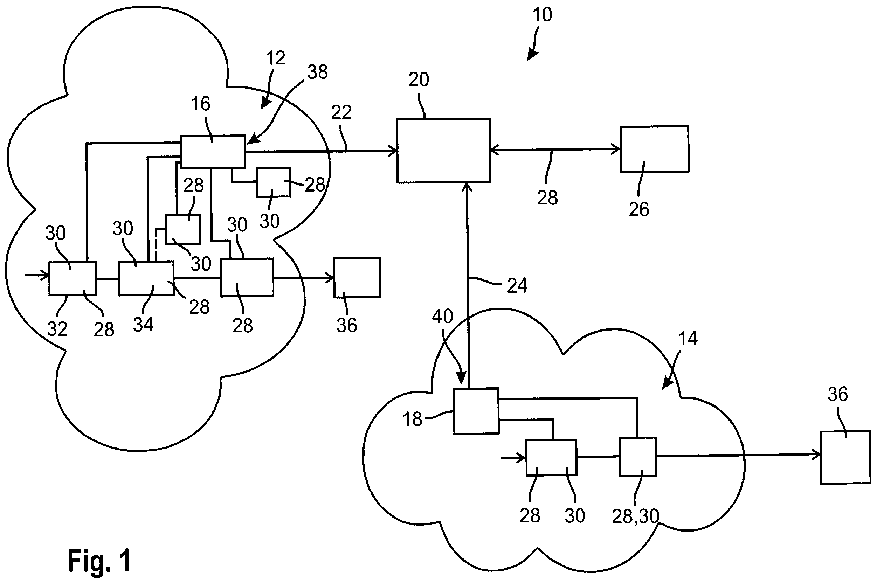

The invention will now be described with reference to the Figure showing a system 10 for transmitting monitoring information. The system 10 comprises two different locations 12, 14 each being defined by a local intranet area. The different location 12, 14 each comprise a transmission device 16, 18 for transmitting monitoring information.

The system 10 further comprises a central cloud unit 20 that has established a first secure connection 22 to the first transmission device 16 of the first location 12 and a second secure connection 24 to the second transmission device 18 of the second location 14. Both secure connections 22, 24 each are unidirectional ones with regard to the data transfer which means that data can only be transmitted in one direction, in particular from the transmission devices 16, 18 to the cloud unit 20.

However, a protocol can be used ensuring a bidirectional connection such as an Internet Protocol (IP) or a Transmission Control Protocol (TCP) in order to enable the exchange of acknowledgement signals, in particular sending acknowledgement signals from the central cloud unit 20 to the transmission device 16, 18.

Nevertheless, the data transfer is a unidirectional one as the transmission device 16, 18 can send data (packages) to the central cloud unit 20 whereas the central cloud unit 20 cannot send data (packages) to the transmission device 16, 18.

Accordingly, the central cloud unit 16, 18 has no direct access to the data on the transmission devices 16, 18.

In the shown embodiment, the system 10 also comprises an end device 26 being a mobile device such as a mobile phone, a tablet or a notebook. The end device 26 has access to the cloud unit 20 via the web such that a bidirectional connection 28 between the end device 26 and the cloud unit 20 is established. Accordingly, the end device 26 is web-enabled wherein the cloud unit 20 provides an appropriate web interface.

As shown for the first location 12, the first transmission device 16 communicates with different functional units 28 such that monitoring information is gathered by the transmission device 16. This monitoring information gathered is forwarded to the cloud unit 20 such that this information is provided to the user having access to the cloud unit 20 by its end device 26.

In the shown embodiment, the functional units 28 are established by broadcasting and/or streaming units 30, for instance a serial digital interface 32 (SDI), an encoder 34 (ENC) and other devices and/or units. In general, the broadcasting and/or streaming units 30 are configured to generate a transport stream that is transmitted to a local receiving unit 36 that is allocated to the dedicated first location 12, for instance Munich. The local receiving unit 36 may be a television or any other device configured to display the broadcasting and/or streaming data related to the transport stream generated by the broadcasting and/or streaming units 30.

In a similar manner, the second location 14 comprises several functional units 28 being broadcasting and/or streaming units 30 that are used for generating a transport stream comprising broadcasting and/or streaming data. The transport stream generated is transmitted to a local receiving unit 36 being allocated to the second location 14, for instance Hamburg.

Generally, the transmission devices 16, 18 each gather monitoring information from the several functional units 28 being allocated to the corresponding location 12, 14, particularly the broadcasting and/or streaming units 30. The transmission devices 16, 18 forward the monitoring information gathered from the different functional units 18 to the cloud unit 20 via the corresponding secure connection 22, 24 for instance a secure hypertext transfer protocol connection (https connection).

The transmission devices 16, 18 are configured to transmit legacy messages via the dedicated secure connection 22, 24 to the cloud unit 20 such that the monitoring information can be transmitted in an easy manner, for instance.

Even though the transport devices 16, 18 each gather the monitoring information of several functional units 28, in particular the broadcasting and/or streaming units 30, the monitoring information is forwarded to the cloud unit 20 via a single outgoing port 38, 40 for each location 12, 14. Thus, the outgoing ports 38, 40 are common outgoing ports for all function units 28 of each location 12, 14. The security for transmitting the monitoring information to the cloud unit 20 is easier to establish as only a single outgoing port 38, 40 has to be secured appropriately. In addition, it is easier to install a firewall protecting only the single outgoing port 38, 40 instead of several outgoing ports for each functional unit 28.

The end device 26 has only access to the cloud unit 20 as it has no access to the functional units 28 themselves via the cloud unit 20, for instance. Thus, the end device 26 may use a standard network application for accessing the cloud unit 20 since the cloud unit 20 only provides the monitoring information forwarded by the transport device(s) 16, 18. The user has no access to the functional units 28, in particular the broadcasting and/or streaming units 30, in order to control the functional units 28. This is inter alia ensured by establishing a unidirectional connection 22, 24 between each transmission device 16, 18 and the central cloud unit 20.

In addition, the cloud unit 20 provides a web interface for user login. Thus, the user accessing the cloud unit 20 via the end device 26 needs a user login. Depending on the user login, in particular the user rights related to the specific user login, only certain portions of the monitoring information gathered can be accessed by the user. Thus, all the information gathered can be provided partly depending on the user rights, role profile or login credential.

Furthermore, the cloud unit 20 may be established by several different devices, in particular computational units, providing together an increased computational power such that deeper and more complex analyses can be applied for analyzing the different monitoring information forwarded to the cloud unit 20 by the several transport devices 16, 18, in particular the transport devices 16, 18 located at different locations 12, 14.

As the transport devices 16, 18 forward the monitoring information of several separately formed functional units 28, particularly broadcasting and/or streaming units 30, deeper and more complex analyses can be performed for gathering more information about the services provided, for instance broadcasting and/or streaming services.

Generally, the transmission devices 16, 18 may comprise a functional unit 28, in particular a broadcasting and/or streaming unit 30.

Accordingly, a system 10 is provided that ensures that the user has easy and secure access to the monitoring information of different locations 12, 14 while it is simultaneously ensured that the user is not enabled to control the functional units 28 which monitoring information is accessible by the user. Hence, unwanted access to the functional units 28 is prevented effectively and easily. The security of the whole system 10 is increased appropriately.

## Claims

1. A system (10) for transmitting monitoring information, comprising a cloud unit (20) and several transmission devices (16, 18) and at least one broadcasting and/or streaming unit (30) in respective common intranet areas representing different locations (12, 14), wherein the at least one broadcasting and/or streaming unit (30) is configured to generate a transport stream for broadcasting and/or streaming for the respective common intranet area, wherein each of the respective transmission devices (16, 18) is configured to gather respective monitoring information of the at least one broadcasting and/or streaming unit (30) in the respective common intranet area and to transmit the respective monitoring information gathered to the cloud unit (20) via a respective secure connection (22, 24), wherein the respective secure connection (22, 24) is a unidirectional one prohibiting direct access to the at least one broadcasting and/or streaming unit (30) in the respective common intranet area, so that a user having access to the cloud unit (20) is not enabled to control the at least one broadcasting and/or streaming unit (30) via the cloud unit (20) as the user only retrieves the respective monitoring information being provided, wherein the cloud unit (20) is configured to combine the respective monitoring information provided by the several transmission devices (16, 18) such that different monitoring information is accessible, and wherein the cloud unit (20) is configured to analyze the different monitoring information.

2. The system (10) according to claim 1, **characterized in that** the monitoring information is provided in real time.

3. The system (10) according to claim 1 or 2, **characterized in that** the transmission device (16, 18) is configured to transmit legacy messages via the secure connection (22, 24) to the cloud unit (20).

4. The system (10) according to any of the preceding claims, **characterized in that** the cloud unit (20) is configured to provide access for a user such that the user is enabled to access the monitoring information on the cloud unit (20) at least partly.

5. The system (10) according to claim 4, **characterized in that** the cloud unit (20) is configured to grant access to the monitoring information based on a user login.

6. The system (10) according to claim 5, **characterized in that** the monitoring information provided by the cloud unit (20) differs with respect to user rights defined by the user login.

7. The system (10) according to any of the preceding claims, **characterized in that** the system (10) comprises a web-enabled end device (26) that is configured to access the monitoring information provided by the cloud unit (20) at least partly.

8. The system (10) according to any of the preceding claims, **characterized in that** several broadcasting and/or streaming units (30) are located in a common intranet area wherein these several units (30) are configured to provide different monitoring information via a common outgoing port (38, 40).

9. A method for providing monitoring information to a user at a remote location, with the following steps:
- for each of several transmission devices (16, 18) in respective common intranet areas representing different locations (12, 14), Providing respective monitoring information of at least one broadcasting and/or streaming unit (30) in a respective common intranet area to the transmission device (16, 18) in the respective common intranet area, wherein the at least one broadcasting and/or streaming unit (30) is configured to generate a transport stream for broadcasting and/or streaming for the respective common intranet area,
- Transmitting, by each of the several transmission devices (16, 18), the respective monitoring information gathered to a cloud unit (20) via a respective secure connection (22, 24), and
- Combining the respective monitoring information provided by the several transmission devices (16, 18) in the cloud unit (20) such that different monitoring information is accessible and analyzing the different monitoring information,
wherein the respective secure connection (22, 24) is a unidirectional one prohibiting direct access to the at least one broadcasting and/or streaming unit (30) in the respective common intranet area, so that a user having access to the cloud unit (20) is not enabled to control the at least one broadcasting and/or streaming unit (30) via the cloud unit (20) as the user only retrieves the respective monitoring information being provided.

10. The method according to claim 9, **characterized in that** a user accesses the cloud unit (20) via a web interface in order to retrieve the monitoring information provided at least partly.

11. The method according to claim 9 or 10, **characterized in that** the monitoring information is transmitted in real time such that the monitoring information provided by the cloud unit (20) are up-to-date.

## Patentansprüche

1. System (10) zum Übertragen von Überwachungsinformationen, das eine Cloudeinheit (20) und mehrere Übertragungsvorrichtungen (16, 18) und mindestens eine Broadcasting- und/oder Streamingeinheit (30) in jeweiligen gemeinsamen Intranetbereichen, die verschiedene Standorte (12, 14) repräsentieren, umfasst, wobei die mindestens eine Broadcasting- und/oder Streamingeinheit (30) dazu ausgelegt ist, einen Transportstrom zum Broadcasting und/oder Streaming für den jeweiligen gemeinsamen Intranetbereich zu erzeugen, wobei jede der jeweiligen Übertragungsvorrichtungen (16, 18) dazu ausgelegt ist, jeweilige Überwachungsinformationen der mindestens einen Broadcasting- und/oder Streamingeinheit (30) im jeweiligen gemeinsamen Intranetbereich zu sammeln und die jeweiligen gesammelten Überwachungsinformationen via eine sichere Verbindung (22, 24) zur Cloudeinheit (20) zu übertragen, wobei die jeweilige sichere Verbindung (22, 24) eine unidirektionale ist, die den direkten Zugriff auf die mindestens eine Broadcasting- und/oder Streamingeinheit (30) im jeweiligen gemeinsamen Intranetbereich verbietet, derart, dass ein Benutzer, der Zugriff auf die Cloudeinheit (20) hat, nicht in der Lage ist, die mindestens eine Broadcasting- und/oder Streamingeinheit (30) via die Cloudeinheit (20) zu steuern, da der Benutzer nur die jeweiligen Überwachungsinformationen, die bereitgestellt werden, abruft, wobei die Cloudeinheit (20) dazu ausgelegt ist, die jeweiligen Überwachungsinformationen, die von den mehreren Übertragungsvorrichtungen (16, 18) bereitgestellt werden, zu kombinieren, derart, dass Zugriff auf verschiedene Überwachungsinformationen besteht, und wobei die Cloudeinheit (20) dazu ausgelegt ist, die verschiedenen Überwachungsinformationen zu analysieren.

2. System (10) nach Anspruch 1, **dadurch gekennzeichnet, dass** die Überwachungsinformationen in Echtzeit bereitgestellt werden.

3. System (10) nach Anspruch 1 oder 2, **dadurch gekennzeichnet, dass** die Übertragungsvorrichtung (16, 18) dazu ausgelegt ist, alte Nachrichten via die sichere Verbindung (22, 24) zur Cloudeinheit (20) zu übertragen.

4. System (10) nach einem der vorhergehenden Ansprüche, **dadurch gekennzeichnet, dass** die Cloudeinheit (20) dazu ausgelegt ist, einem Benutzer Zugriff bereitzustellen, derart, dass der Benutzer in der Lage ist, mindestens teilweise auf die Überwachungsinformationen in der Cloudeinheit (20) zuzugreifen.

5. System (10) nach Anspruch 4, **dadurch gekennzeichnet, dass** die Cloudeinheit (20) dazu ausgelegt ist, Zugriff auf die Überwachungsinformationen auf Basis einer Benutzeranmeldung zu gewähren.

6. System (10) nach Anspruch 5, **dadurch gekennzeichnet, dass** sich die Überwachungsinformationen, die von der Cloudeinheit (20) bereitgestellt werden, mit Bezug auf Benutzerrechte, die durch die Benutzeranmeldung definiert werden, unterscheiden.

7. System (10) nach einem der vorhergehenden Ansprüche, **dadurch gekennzeichnet, dass** das System (10) eine webfähige Endvorrichtung (26) umfasst, die dazu ausgelegt ist, mindestens teilweise auf die Überwachungsinformationen, die von der Cloudeinheit (20) bereitgestellt werden, zuzugreifen.

8. System (10) nach einem der vorhergehenden Ansprüche, **dadurch gekennzeichnet, dass** sich mehrere Broadcasting- und/oder Streamingeinheiten (30) in einem gemeinsamen Intranetbereich befinden, wobei diese mehreren Einheiten (30) dazu ausgelegt sind, via einen gemeinsamen Ausgangsport (38, 40) verschiedene Überwachungsinformationen bereitzustellen.

9. Verfahren zum Bereitstellen von Überwachungsinformationen für einen Benutzer an einem entfernten Standort mit den folgenden Schritten:
- für jede von mehreren Übertragungsvorrichtungen (16, 18) in jeweiligen gemeinsamen Intranetbereichen, die verschiedene Standorte (12, 14) repräsentieren, Bereitstellen von jeweiligen Überwachungsinformationen von mindestens einer Broadcasting- und/oder Streamingeinheit (30) in einem jeweiligen gemeinsamen Intranetbereich für die Übertragungsvorrichtung (16, 18) im jeweiligen gemeinsamen Intranetbereich, wobei die mindestens eine Broadcasting- und/oder Streamingeinheit (30) dazu ausgelegt ist, einen Transportstrom zum Broadcasting und/oder Streaming für den jeweiligen gemeinsamen Intranetbereich zu erzeugen,
- Übertragen der jeweiligen gesammelten Überwachungsinformationen durch die mehreren Übertragungsvorrichtungen (16, 18) via eine jeweilige sichere Verbindung (22, 24) zu einer Cloudeinheit (20), und
- Kombinieren der jeweiligen Überwachungsinformationen, die von den mehreren Übertragungsvorrichtungen (16, 18) in der Cloudeinheit (20) bereitgestellt werden, derart, dass Zugriff auf verschiedene Überwachungsinformationen besteht, und Analysieren der verschiedenen Überwachungsinformationen,
wobei die jeweilige sichere Verbindung (22, 24) eine unidirektionale ist, die den direkten Zugriff auf die mindestens eine Broadcasting- und/oder Streamingeinheit (30) im jeweiligen gemeinsamen Intranetbereich verbietet, derart, dass ein Benutzer, der Zugriff auf die Cloudeinheit (20) hat, nicht in der Lage ist, die mindestens eine Broadcasting- und/oder Streamingeinheit (30) via die Cloudeinheit (20) zu steuern, da der Benutzer nur die jeweiligen Überwachungsinformationen, die bereitgestellt werden, abruft.

10. Verfahren nach Anspruch 9, **dadurch gekennzeichnet, dass**, ein Benutzer via eine Webschnittstelle auf die Cloudeinheit (20) zugreift, um Überwachungsinformationen, die bereitgestellt werden, mindestens teilweise abzurufen.

11. Verfahren nach Anspruch 9 oder 10, **dadurch gekennzeichnet, dass** die Überwachungsinformationen in Echtzeit übertragen werden, derart, dass die Überwachungsinformationen, die von der Cloudeinheit (20) bereitgestellt werden, aktuell sind.

## Revendications

1. Système (10) destiné à transmettre des données de surveillance, qui comprend une unité cloud (20) et plusieurs dispositifs de transmission (16, 18) et au moins une unité de diffusion et/ou de streaming (30) dans des zones intranet communes respectives qui représentent différents emplacements (12, 14), dans lequel la au moins une unité de diffusion et/ou de streaming (30) est configurée pour générer un flux de transport destiné à la diffusion et/ou au streaming pour la zone intranet commune respective, dans lequel chacun des dispositifs de transmission respectifs (16, 18) est configuré pour collecter des données de surveillance respectives de la au moins une unité de diffusion et/ou de streaming (30) dans la zone intranet commune respective et pour transmettre les données de surveillance respectives collectées à l'unité de cloud (20) via une connexion sécurisée respective (22, 24), dans lequel la connexion sécurisée respective (22, 24) est une connexion unidirectionnelle qui interdit l'accès direct à la au moins une unité de diffusion et/ou de streaming (30) dans la zone intranet commune respective, de sorte qu'un utilisateur qui a accès à l'unité de cloud (20) n'est pas autorisé à contrôler la au moins une unité de diffusion et/ou de streaming (30) via l'unité de cloud (20) lorsque l'utilisateur récupère uniquement les données de surveillance respectives fournies, dans lequel l'unité de cloud (20) est configurée pour combiner les données de surveillance respectives fournies par les dispositifs de transmission (16, 18) de sorte que les différentes données de surveillance soient accessibles, et dans lequel l'unité de cloud (20) est configurée pour analyser les différentes données de surveillance.

2. Système (10) selon la revendication 1, **caractérisé en ce que** les données de surveillance sont fournies en temps réel.

3. Système (10) selon la revendication 1 ou 2, **caractérisé en ce que** le dispositif de transmission (16, 18) est configuré pour transmettre des messages hérités via la connexion sécurisée (22, 24) à l'unité de cloud (20).

4. Système (10) selon l'une quelconque des revendications précédentes, **caractérisé en ce que** l'unité de cloud (20) est configurée pour fournir un accès à un utilisateur de sorte que l'utilisateur puisse accéder aux données de surveillance sur l'unité de cloud (20) au moins partiellement.

5. Système (10) selon la revendication 4, **caractérisé en ce que** l'unité de cloud (20) est configurée pour accorder l'accès aux données de surveillance sur la base d'une connexion d'utilisateur.

6. Système (10) selon la revendication 5, **caractérisé en ce que** les données de surveillance fournies par l'unité de cloud (20) diffèrent par rapport aux droits d'utilisateur définis par la connexion d'utilisateur.

7. Système (10) selon l'une quelconque des revendications précédentes, **caractérisé en ce que** le système (10) comprend un dispositif final Web (26) qui est configuré pour accéder aux données de surveillance fournies par l'unité cloud (20) au moins partiellement.

8. Système (10) selon l'une quelconque des revendications précédentes, **caractérisé en ce que** plusieurs unités de diffusion et/ou de streaming (30) se trouvent dans une zone intranet commune dans laquelle ces unités (30) sont configurées pour fournir différentes données de surveillance via un port de sortie commun (38, 40).

9. Procédé de fourniture de données de surveillance à un utilisateur distant, qui comprend les étapes qui consistent à :
- pour chacun des dispositifs de transmission (16, 18) dans les zones intranet communes respectives qui représentent différents emplacements (12, 14), fournir des données de surveillance respectives d'au moins une unité de diffusion et/ou de streaming (30) dans une zone intranet commune respective au dispositif de transmission (16, 18) dans la zone intranet commune respective, dans lequel la au moins une unité de diffusion et/ou de streaming (30) est configurée pour générer un flux de transport destiné à la diffusion et/ou au streaming pour la zone intranet commune respective,
- transmettre, par chacun des dispositifs de transmission (16, 18), les données de surveillance respectives collectées à une unité de cloud (20) via une connexion sécurisée respective (22, 24), et
- combiner les données de surveillance respectives fournies par les dispositifs de transmission (16, 18) dans l'unité de cloud (20) de sorte que différentes données de surveillance soient accessibles, et analyser les différentes données de surveillance,
dans lequel la connexion sécurisée respective (22, 24) est une connexion unidirectionnelle qui interdit l'accès direct à la au moins une unité de diffusion et/ou de streaming (30) dans la zone intranet commune respective, de sorte qu'un utilisateur qui a accès à l'unité de cloud (20) n'est pas autorisé à contrôler la au moins une unité de diffusion et/ou de streaming (30) via l'unité de cloud (20) lorsque l'utilisateur récupère uniquement les données de surveillance respectives fournies.

10. Procédé selon la revendication 9, **caractérisé en ce qu'**un utilisateur accède à l'unité de cloud (20) via une interface Web afin de récupérer les données de surveillance fournies au moins partiellement.

11. Procédé selon la revendication 9 ou 10, **caractérisé en ce que** les données de surveillance sont transmises en temps réel de sorte que les données de surveillance fournies par l'unité de cloud (20) soient à jour.
